# EUROPÄISCHE PATENTSCHRIFT

(11) **EP 2 976 539 B1**
(45) Veröffentlichungstag und Bekanntmachung des Hinweises auf die Patenterteilung: **12.07.2017**
(21) Anmeldenummer: 13821684.1
(22) Anmeldetag: 17.12.2013
(51) Int. Cl.: F16C 35/078, F16C 35/063, F16C 23/08

(54) **WELLEN- UND HÜLSENGEWINDE-ADAPTER FÜR HYDRAULIKMUTTERN**
SHAFT AND THREADED SLEEVE ADAPTER FOR HYDRAULIC NUT
ADAPTEUR D'UN ARBRE ET ADAPTEUR D'UNE DOUILLE FILETÉE POUR ÉCROU HYDRAULIQUE

(30) Priorität: 19.03.2013 DE 102013204848
(43) Veröffentlichungstag der Anmeldung: 27.01.2016
(73) Patentinhaber: Trans-Innova GmbH, 12623 Berlin (DE)
(72) Erfinder: SCHERF, Frank, 18057 Rostock (DE)
(74) Vertreter: Wehlan, Helmut
(86) Internationale Anmeldenummer: PCT/EP2013/077008
(87) Internationale Veröffentlichungsnummer: WO 2014/146742

(56) Entgegenhaltungen:
- EP-A1- 0 718 515
- EP-A1- 2 050 975
- JP-A- H0 861 379
- US-A1- 2005 058 520

## Beschreibung

Die Erfindung betrifft einen Wellen- und Hülsengewinde-Adapter für Hydraulikmuttern. Anwendungsgebiet ist der allgemeine Maschinenbau, insbesondere Montage und Demontage von verschiedenen Bauteilen mit kegeliger Bohrung, vorzugsweise bei Wälzlagern mit kegeligem Sitz.

### Stand der Technik

Wälzlager mit kegeliger Bohrung werden stets mit fester Passung auf einer Welle eingebaut. Die Festigkeit der Passung wird durch die axiale Verschiebung des Innenringes gegenüber dem kegeligen Lagersitz realisiert. Die axiale Verschiebung wird bei mittleren und großen Wälzlagern aufgrund hoher Ein- und Ausbaukräfte mit einer Hydraulikmutter getätigt. Es wird Öl in die Mutter gepumpt und der Kolben wird herausgedrückt (vergl. z.B. EP 0 718 515 A1). Hydraulikmuttern werden zur Montage und Demontage von Lagern, anderen Bauteilen mit kegeligen Passflächen, Spann- und Abziehhülsen in Maschinen und Stehlagergehäusen verwendet.

Wälzlager mit kegeligem Sitz werden auf kegeliger Welle, Spann- oder Abziehhülse in Stehlagergehäusen verbaut. Die Stehlagergehäuse sind teilweise über eine Zwischenplatte auf einem Fundament verschraubt. Durch Entfernen der Zwischenplatte kann das Stehlagergehäuse nach unten ausgeschwenkt werden. Das Lager kann mit einer Hydraulikmutter montiert und demontiert werden. Nachteilig ist, wenn die Zwischenplatte nicht vorhanden ist, muss die Maschine zum Lagerwechsel mit Hydraulikmutter abgebaut werden. Die Durchmesser der Wellendurchführungen von Stehlagergehäusen bieten nicht die Möglichkeit, Hydraulikmuttern auf die Gewinde von Wellen, Spann- und Abziehhülsen zu montieren.

### Aufgabe der Erfindung

Der Erfindung liegt die Aufgabe zugrunde, die Nachteile des bekannten Stands der Technik zu beseitigen.

### Lösung

Die Aufgabe wurde gemäß den Merkmalen der Patentansprüche gelöst. Erfindungsgemäß wird ein Wellen- und Hülsengewinde-Adapter für Hydraulikmuttern bereitgestellt, welcher die Probleme des Stands der Technik in hervorragender Weise löst. Überraschenderweise hat sich herausgestellt, dass die Montage und Demontage von Wälzlagern im Stehlagergehäuse durch die Wellendurchführung der Stehlagergehäuse möglich ist. Der erfindungsgemäße Wellen- und Hülsengewinde-Adapter ist an das Gewinde von Wellen-, Spann- und Abziehhülsen angepasst. Er besteht aus einem Adapter-Gewindeteil (1), dass zusammen mit einem Adapter-Kolben (2) auf eine Spannhülse (5) durch die Wellendurchführung aufgeschraubt wird. Die Hydraulikmutter (6) wird auf das Adapter-Gewindeteil (1) geschraubt. Über die Hydraulikmutter (6) wird das Bauteil mit kegeliger Bohrung (4), vorzugsweise ein Wälzlager, gegenüber der Spannhülse (5) verschoben und gespannt.

Vorteile der Erfindung sind - neben der Montage und Demontage von Wälzlagern im Stehlagergehäuse durch die Wellendurchführung der Stehlagergehäuse - die Verwendung von nur einer Hydraulikmuttergröße für die Montage und Demontage von verschiedenen Wälzlagern (Bohrungsdurchmesser). Die Erfindung eignet sich auch zum Ein- und Ausbau von Bauteilen wie Kupplungen, Zahnrädern oder Schiffspropellern.

Gegenstand der Erfindung ist auch ein Verfahren zur Montage von Bauteilen mit kegeliger Bohrung. Dabei wird das Stehlagergehäuse (3) mit dem Bauteil mit kegeliger Bohrung (4) - vorzugsweise ein Lager - und Spannhülse (5) auf der Welle (8) und dem Fundament (7) positioniert. Das Adapter-Gewindeteil (1) wird zusammen mit dem Adapter-Kolben (2) auf die Spannhülse (5) durch die Wellendurchführung aufgeschraubt. Die Hydraulikmutter (6) wird auf das Adapter-Gewindeteil (1) geschraubt. Über die Hydraulikmutter (6) wird das Lager (4) gegenüber der Spannhülse (5) verschoben und gespannt.

Die Demontage erfolgt dadurch, dass das Adapter-Gewindeteil (1) ohne Adapter-Kolben (2) auf die Spannhülse (5) durch die Wellendurchführung aufgeschraubt wird. Die Hydraulikmutter (6) wird mit dem Kolben entgegen des Wälzlagers (4) aufgeschraubt. Die Hydraulikmutter (6) muss sich gegen einen Stützring o. ä. auf der Welle abstützen können.

Über die Hydraulikmutter (6) wird das Lager (4) gegenüber der Spannhülse (5) verschoben und entspannt.

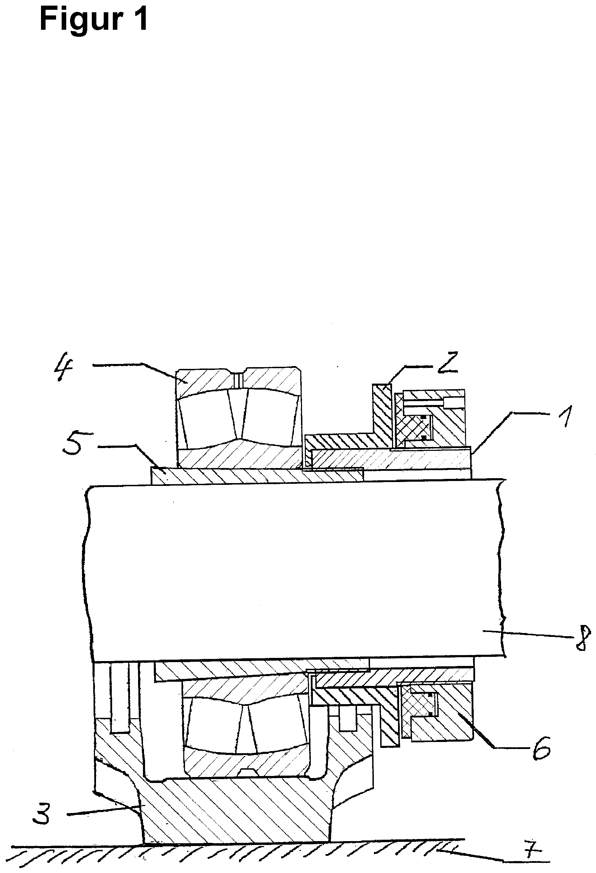

Die erfindungsgemäße Vorrichtung soll nachfolgend anhand der Figur 1 näher erläutert werden, ohne die Erfindung auf diese Zeichnung zu reduzieren.

Die Figur 1 zeigt einen Querschnitt mit Adapter-Gewindeteil (1) mit dem Adapter-Kolben (2) sowie ein Wälzlager (4), eine Spannhülse (5), eine Hydraulikmutter (6) und eine Welle (8). Zusätzlich sind ein Stehlagergehäuse (3) und ein Fundament (7) abgebildet. Der erfindungsgemäße Adapter besteht vorzugsweise aus Stahl.

### Bezugszeichenliste

- (1): - Adapter-Gewindeteil
- (2): - Adapter-Kolben
- (3): - Stehlagergehäuse
- (4): - Wälzlager
- (5): - Spannhülse
- (6): - Hydraulikmutter
- (7): - Fundament
- (8): - Welle

## Patentansprüche

1. Wellen- und Hülsengewinde-Adapter für Hydraulikmuttern (6), umfassend ein Adapter-Gewindeteil (1) und einen Adapter-Kolben (2), **dadurch gekennzeichnet, dass** eine Hydraulikmutter (6) auf das Adapter-Gewindeteil (1) aufschraubbar ist.

2. Wellen- und Hülsengewinde-Adapter für Hydraulikmuttern (6) nach Anspruch 1, **dadurch gekennzeichnet, dass** das Adapter-Gewindeteil (1) zusammen mit dem Adapter-Kolben (2) auf eine Spannhülse (5) durch eine Wellendurchführung aufschraubbar ist.

3. Verfahren zur Montage von Bauteilen mit kegeliger Bohrung, **gekennzeichnet durch** folgende Schritte:
a) ein Stehlagergehäuse (3) mit dem Bauteil mit kegeliger Bohrung (4) und Spannhülse (5) wird auf einer Welle (8) positioniert
b) das Adapter-Gewindeteil (1) gemäß Anspruch 1 oder 2 wird zusammen mit dem Adapter-Kolben (2) auf die Spannhülse (5) durch die Wellendurchführung aufgeschraubt
c) die Hydraulikmutter (6) wird auf das Adapter-Gewindeteil (1) geschraubt
d) über die Hydraulikmutter (6) wird das Lager (4) gegenüber der Spannhülse (5) verschoben und gespannt.

4. Verfahren nach Anspruch 3, **dadurch gekennzeichnet, dass** es sich bei dem Bauteil mit kegeliger Bohrung (4) um ein Lager, vorzugsweise ein Wälzlager, handelt.

5. Verwendung des Wellen- und Hülsengewinde-Adapters für Hydraulikmuttern (6) nach Anspruch 1 zur Montage und Demontage von Bauteilen mit kegeligen Passflächen, vorzugsweise von Lagern, Spann- und Abziehhülsen in Maschinen und Stehlagergehäusen.

## Claims

1. A shaft and sleeve thread adapter for hydraulic nuts (6), comprising an adapter threaded part (1) and an adapter piston (2), **characterized in that** a hydraulic nut (6) is screwable onto the adapter threaded part (1).

2. The shaft and sleeve thread adapter for hydraulic nuts (6) according to patent claim 1, **characterized in that** the adapter threaded part (1) together with the adapter piston (2) is screwable onto a clamping sleeve (5) via a shaft bushing.

3. A method for mounting of components having a conical bore, **characterized by** the following steps:
a) a pillow block housing (3) with the component having a conical bore (4) and clamping sleeve (5) is positioned on a shaft (8)
b) the adapter threaded part (1) according to patent claim 1 or 2 together with the adapter piston (2) is screwed onto the clamping sleeve (5) via the shaft bushing
c) the hydraulic nut (6) is screwed onto the adapter threaded part (1)
d) via the hydraulic nut (6) the bearing (4) is moved with respect to the clamping sleeve (5) and clamped.

4. The method according to patent claim 3, **characterized in that** the component with conical bore (4) is a bearing, preferably a rolling bearing.

5. A use of the shaft and sleeve thread adapter for hydraulic nuts (6) according to patent claim 1 for mounting and dismounting of components with conical mating surfaces, preferably of bearings, clamping and withdrawal sleeves in machines and pillow block housings.

## Revendications

1. Adaptateur de filetage d'arbre et de manchon pour des écrous hydrauliques (6) comportant une partie filetée d'adaptateur (1) et un piston d'adaptateur (2), **caractérisé en ce qu'**une écrou hydraulique (6) peut être vissé sur la partie filetée d'adaptateur (1)

2. Adaptateur de filetage d'arbre et de manchon pour des écrous hydrauliques (6) selon la revendication 1, **caractérisé en ce que** la partie filetée d'adaptateur (1) ensemble avec le pison d'adaptateur (2) peut être vissée sur une douille de serrage (5) par une traversée d'arbre.

3. Procédé pour le montage des composants avec un alésage conique, **caractérisé par** les étapes suivantes:
a) un logement de palier vertical (3) avec le composant avec alésage conique (4) et douille de serrage (5) est positionné sur un arbre (8)
b) la partie filetée d'adaptateur (1) selon la revendication 1 ou 2 ensemble avec le piston d'adaptateur (2) est vissée sur la douille de serrage (5) par la traversée d'arbre
c) l'écrou hydraulique (6) est vissé sur la partie filetée d'adaptateur (1)
d) à travers l'écrou hydraulique (6) le palier (4) est déplacé et serré par rapport à la douille de serrage (5)

4. Procédé selon la revendication 3, **caractérisé en ce que** le composant avec alésage conique (4) est un palier, de préférence un palier à roulement.

5. Utilisation de l'adaptateur de filetage d'arbre et de manchon pour des écrous hydrauliques (6) selon la revendication 1 pour le montage et le démontage des composants avec des surfaces coniques d'ajustage, de préférence des paliers, des manchons de serrages et de démontage dans des machines et des logements de palier vertical.
